# EUROPEAN PATENT APPLICATION

(11) **EP 1 724 395 A1**
(43) Date of publication of application: **22.11.2006**
(21) Application number: 05720590.8
(22) Date of filing: 11.03.2005
(51) Int. Cl.: D21H 13/26, H01G 9/02, H01M 2/16

(54) **HEAT RESISTANT NON-WOVEN FABRIC**

(30) Priority: 12.03.2004 JP 2004070544; 12.03.2004 JP 2004070545
(71) Applicant: MITSUBISHI PAPER MILLS LIMITED, Tokyo 100-0005 (JP)
(72) Inventor: TSUKUDA, Takahiro c/o Mitsubishi Paper Mills Ltd., Tokyo 100-0005 (JP); MIDORIKAWA, Masatoshi Mitsubishi Paper Mills Ltd., Tokyo 100-0005 (JP)
(74) Representative: Albrecht, Thomas
(86) International application number: PCT/JP2005/004319
(87) International publication number: WO 2005/088011

(57) **Abstract**

The present invention discloses a heat-resistant nonwoven fabric which comprises a layer having heat resistance and a layer having an anti-oxidative property, and the heat-resistant nonwoven fabric has a pierce strength after treatment at 250°C for 50 hours of 0.5N or more, and a position (A) of an absorptive band showing a maximum infrared absorbance at 500 cm⁻¹ to 3000 cm⁻¹ of the layer having an anti-oxidative property does not change before and after applying a voltage of 2.7V for 72 hours, and an absolute value of a changed rate ((C-D)/C) of a ratio (D) which is a ratio of an absorbance of (A) and an absorbance of (B) after applying the voltage, based on a ratio (C) which is a ratio of the maximum absorbance and the absorbance of (B) before applying the voltage of less than 25%.

## Description

### TECHNICAL FIELD

The present invention relates to heat-resistant nonwoven fabric having anti-oxidative property.

### BACKGROUND ART

In recent years, as one of characteristics required for an electrochemical element, there may be mentioned heat resistance such as reflow heat resistance, etc. Therefore, nonwoven fabric incorporated into the electrochemical element is used those excellent in heat resistance. For example, there may be mentioned an electrolytic capacitor using a separator which comprises an aromatic polyamide fiber (for example, see Patent Literatures 1 and 2), an electrolytic capacitor using a separator comprising polyamide fiber as a main fiber (for example, see Patent Literature 3) and the like.

However, a lithium ion battery, an electric double layer capacitor, an electrolytic capacitor, etc., which are used with high voltage among the electrochemical elements occur potent oxidation power at the positive electrode side, so that if a separator comprising an aromatic polyamide or an aliphatic polyamide which is likely oxidized and deteriorated is used, there is a problem that the lifetime of the electrochemical element is shortened.
[Patent Literature 1] Japanese Unexamined Patent Publication No. Hei.1-278713
[Patent Literature 2] Japanese Unexamined Patent Publication No. Hei.2-20012
[Patent Literature 3] Japanese Unexamined Patent Publication No. 2002-198263

### DISCLOSURE OF THE INVENTION

### PROBLEMS TO BE SOLVED BY THE INVENTION

An object of the present invention is to provide a heat-resistant nonwoven fabric excellent in anti-oxidative property.

### MEANS TO SOLVE THE PROBLEMS

The present inventors have carried out extensive studies to solve the problem, and as a result, they have found that a heat-resistant nonwoven fabric excellent in anti-oxidative property can be obtained by integrating a layer having heat resistance and a layer having an anti-oxidative property, whereby they have accomplished the present invention.

That is, the heat-resistant nonwoven fabric of the present invention comprises a layer having heat resistance and a layer having anti-oxidative property, and the heat-resistant nonwoven fabric has a pierce strength after treatment at 250°C for 50 hours of 0.5N or more, and a position (A) of an absorptive band showing a maximum infrared absorbance at 500 cm⁻¹ to 3000 cm⁻¹ of the layer having an anti-oxidative property does not change before and after applying a voltage of 2.7V for 72 hours, and an absolute value of a changed rate ((C-D)/C) of a ratio (D) which is a ratio of an absorbance of (A) and an absorbance of (B) after applying the voltage, based on a ratio (C) which is a ratio of the maximum absorbance and the absorbance of (B) before applying the voltage of less than 25%.

In the present invention, at least the layer having heat resistance preferably contains heat resistant fiber having all of a softening point, a melting point and a thermal decomposition temperature of 250°C or higher and 700°C or lower.

In the present invention, at least a part of the heat resistant fiber is preferably fibrillated to a fiber diameter of 1 µm or less.

### BEST MODE TO CARRY OUT THE INVENTION

The electrochemical element in the present invention means manganese dry battery, alkaline manganese battery, silver oxide battery, lithium battery, lead storage battery, nickel-cadmium storage battery, nickel-hydrogen storage battery, nickel-zinc storage battery, silver oxide-zinc storage battery, lithium ion battery, lithium polymer battery, various kinds of gel electrolyte batteries, zinc-air storage battery, iron-air storage battery, aluminum-air storage battery, fuel battery, solar battery, sodium sulfur battery, polyacene battery, electrolytic capacitor, electric double layer capacitor, etc.

The heat-resistant nonwoven fabric of the present invention has a pierce strength after treatment at 250°C for 50 hours of 0.5N or more, preferably 0.7N or more, more preferably 0.9N or more. Even when the heat treatment is carried out at a lower temperature than 250°C, it shows the pierce strength of 0.5N or more. The pierce strength in the present invention means a maximum load (N) when a metal needle having a diameter of 1 mm and the tip of which is rounded is vertically fallen to the surface of the heat-resistant nonwoven fabric sample with a constant rate, and penetrated the sample as such. When the tip of the metal needle is flat or plane, an angle of which the tip touches the surface of the sample becomes not in the right angle, and when there is burr at the tip, the needle likely penetrates the sample, whereby fluctuation of the measured values becomes remarkable, so that a metal needle the tip of which is rounded is used. The roundness is preferably curvature of 1 to 2. As a measurement device of pierce strength, commercially available tensile tester or a table type material tester is used. If the pierce strength is less than 0.5N, the heat-resistant nonwoven fabric is brittle, so that it is likely broken or injured with a slight pressure or impact. The pierce strength is preferably 10N or less, more preferably 5N or less. In a heat-resistant nonwoven fabric having the pierce strength after the heat treatment is larger than 10N, a thickness sometimes exceeds 300 µm, and an electrode surface area contained in an electrochemical element such as a secondary battery or an electric double layer capacitor, etc., is small so that a capacity of the electrochemical element is small.

As a devise to heat at 250°C, a commercially available thermostatic dryer or electric furnace, etc. may be used. The atmosphere may be either air, an inert gas or vacuum, and either in an inert gas or in vacuum in order to control deterioration of strength of the heat-resistant nonwoven fabric by oxidation or remarkable change in physical properties. When vacuum is selected, it may be higher vacuum degree than 10⁻² Torr.

In the present invention, at least the layer having heat resistance preferably contains heat resistant fiber having all of the softening point, the melting point and the thermal decomposition temperature of 250°C or higher and 700°C or lower. A content of the fiber is 20% by weight or more based on the whole heat-resistant nonwoven fabric, then required heat resistance can be easily obtained.

A softening point, a melting point and a thermal decomposition temperature of the heat resistant fiber to be used in the present invention are preferably at 260°C to 650°C, more preferably 270°C to 600°C, and most preferably 280°C to 550°C.

The layer having heat resistance in the present invention is not specifically limited so long as it is the above-mentioned layer having heat resistance, and a formulation amount of the heat resistant fiber constituting the layer having heat resistance is preferably 50 to 100% by weight based on the total amount of the layer, more preferably 70 to 100% by weight, and most preferably 80 to 100% by weight.

In the present invention, as the heat resistant fiber having all of the softening point, the melting point and the thermal decomposition temperature of 250°C or higher and 700°C or lower, there may be mentioned wholly aromatic polyamide, wholly aromatic polyester, wholly aromatic polyester amide, wholly aromatic polyether, wholly aromatic polycarbonate, wholly aromatic polyazomethine, polyphenylene sulfide (PPS), poly-p-phenylenebenzobisthiazole (PBZT), polybenzimidazole (PBI), polyether ether ketone (PEEK), polyamideimide (PAI), polyimide, polytetrafluoroethylene (PTFE), poly-p-phenylene-2,6-benzobisoxazole (PBO), etc., and they may be used singly, or in combination of two or more kinds. PBZT may be either a trans form or a cis form. Here, in the category of "all of the softening point, the melting point and the thermal decomposition temperature are 250°C or higher and 700°C or lower", the softening point or the melting point is not sufficiently clear, but those having the thermal decomposition temperature of 250°C or higher and 700°C or lower are also contained. A wholly aromatic polyamide or PBO, etc., are an example thereof. Among these fibers, the wholly aromatic polyamide which is easily and likely fibrillated uniformly due to its liquid crystal property is preferred, and in particular para series wholly aromatic polyamide and the wholly aromatic polyester are preferred.

The para series wholly aromatic polyamide may be mentioned poly(paraphenylenetelephthalamide), poly(para-benzamide), poly(paraamide hydrazide), poly(paraphenylene-telephthalamide-3,4-diphenyl ether telephthalamide), poly-(4,4'-benzanilide telephthalamide), poly(paraphenylene-4,4'-biphenylenedicarboxylic acid amide), poly(paraphenylene-2,6-naphthalene dicarboxylic acid amide), poly(2-chloro-p-phenylenetelephthalamide), copolyparaphenylene-3,4'-oxydiphenylenetelephthalamide, etc., but it is not limited by these. Incidentally, in the para series wholly aromatic polyamide, poly(paraphenylenetelephthalamide) is most preferred.

The wholly aromatic polyester can be synthesized by combining monomers such as an aromatic diol, an aromatic dicarboxylic acid, an aromatic hydroxycarboxylic acid, etc., and changing the composition ratio, etc. For example, there may be mentioned a copolymer of p-hydroxybenzoic acid and 2-hydroxy-6-naphthoic acid, but it is not limited by these.

It is preferred that at least part of the heat resistant fiber of the present invention is fibrillated to a fiber diameter of 1 µm or less (in the following, it is designated to as fibrillated fiber or fibrillated heat resistant fiber.). Here, the fibril represents an extremely fine diameter portion by divided to the direction mainly parallel to the fiber axis and at least a part thereof is a fiber diameter of 1 µm or less, and is different from fibrid as clearly described in U.S. Patent No. 5,833,807 or U.S. Patent No. 5,026,456 in the process for preparing the same and the shape thereof. An aspect ratio which is a ratio of a length and a width of the fibril in the present invention is preferably distributed in the range of 20:1 to 100000:1, and a Canadian Standard Freeness is preferably within the range of 0 ml to 500 ml. Moreover, those having a weight average fiber length in the range of 0.1 mm or more and 2 mm or less are preferred.

As the fibrillated fiber in the present invention, there may be used a refiner, a beater, a mill, a pulverizer, a rotary blade system homogenizer in which a shear force is provided by a high-speed rotating blade, a double-cylinder type high speed homogenizer in which a shear force is generated between an inner blade which is a cylinder shape and rotating with a high-speed and a fixed outer blade, a ultrasonic wave crusher in which a material is fined by an impact of ultrasonic wave, a high-pressure homogenizer in which at least 3000 psi pressure difference is provided to a fiber suspension to pass through a small diameter orifice to provide a high-speed, and by colliding them to cause rapid deceleration whereby a shear force or a cutting force is provided to the fiber, and the like, in particular, those prepared by a high-pressure homogenizer are preferred since finer fibril can be obtained.

The anti-oxidative property in the present invention means those in which the surface of the nonwoven fabric at the positive electrode side due to voltage application of 2.7V is not deteriorated or difficultly deteriorated. Deterioration of the surface of the nonwoven fabric can be judged by an infrared absorption spectrum at 500 cm⁻¹ to 3000 cm⁻¹ before and after applying voltage thereto. In the present invention, when the position (A) of an absorption band showing a maximum infrared absorbance at 500 cm⁻¹ to 3000 cm⁻¹ does not change before and after applying a voltage of 2.7V for 72 hours, and, when the absolute value of a changed rate ((C-D)/C) of a ratio (D) which is a ratio of an absorbance of (A) and an absorbance (B) after applying the voltage, based on a ratio (C) which is a ratio of the maximum absorbance and the absorbance at the wave number (B) before applying the voltage is less than 25%, the fiber is said to have an anti-oxidative property. The wave number (B) at this time is a wave number of independent absorption peak other than an absorption peak branched from the absorption band (A) and a shoulder peak, and is a wave number successively selected from those having a largest absorbance among the group of independent absorption peaks, and is a wave number in which the absolute value of a changed rate ((C-D)/C) of a ratio of absorbances is less than 25% and the absorbance becomes the maximum. On the other hand, a wave number (B) which does not have an anti-oxidative property is also successively selected from a largest absorbance among the group of independent absorption peaks other than an absorption peak branched from the absorption band (A) and a shoulder peak, and in at least one wave number (B), the absolute value of a changed rate of the ratio of absorbances is 25% or more. Absorption bands of infrared rays are specific to a chemical bond(s), so that specific infrared absorption spectrum can be obtained for the respective fiber materials which constitute the heat-resistant nonwoven fabric. For example, when the fiber contains a polyester, an absorption band derived from carbonyl C=O stretch appears at around 1950-1600 cm⁻¹, when it contains a polyamide, an absorption band derived from C=O stretch of amide I appears at around 1715-1630 cm⁻¹, an absorption band derived from C=O stretch of amide II appears at around 1650-1475 cm⁻¹, and when it contains an aliphatic nitrile, an absorption band derived from 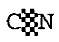 stretch appears at around 2250-2225 cm⁻¹. An absorption band derived from a methylene group of a linear alkane having 7 or less carbon atoms appears at around 720 cm⁻¹, an absorption band of a vinyl group (CH₂=CH-) at around 1640 cm⁻¹, and an absorption band of a vinylidene alkene (CH₂=C<) at around 1650cm⁻¹.

For evaluating the anti-oxidative property, a heat-resistant nonwoven fabric comprising a layer having heat resistance and a layer having an anti-oxidative property is sandwiched by two electrodes, an infrared absorption spectrum at the surface of the layer having an anti-oxidative property contacted with the positive electrode side after applying a voltage of 2.7V for 72 hours in an organic electrolyte, and an infrared absorption spectrum at the surface of the layer having an anti-oxidative property before applying a voltage are compared and examined. As the electrode, metals such as platinum or aluminum, etc., a carbon such as graphited carbon, carbon, activated carbon, etc. may be used. As for the electrolyte, there may be mentioned those in which an ion dissociatable salt is dissolved in an organic solvent such as propylene carbonate (PC), ethylene carbonate (EC), dimethyl carbonate (DMC), diethyl carbonate (DEC), acetonitrile (AN), γ-butyrolactone (BL), dimethylformamide (DMF), tetrahydrofuran (THF), dimethoxyethane (DME), dimethoxymethane (DMM), sulfolane (SL), dimethylsulfoxide (DMSO), ethylene glycol, propylene glycol, etc., ionic liquid (solid fused salt), etc., but it is not limited by these.

As the anti-oxidative fiber in the present invention, it may be any material so long as it is fiber which does not oxidized or deteriorated, or difficultly oxidized or deteriorated at the positive electrode side, and there may be mentioned, for example, a polyester such as polyethylene terephthalate or polybutylene terephthalate, etc., wholly aromatic polyester, polyolefin, an acryl comprising acrylonitrile or derivatives thereof, fiber comprising PTFE, PEEK, PBZT, PBO, etc., and a modified fiber to which anti-oxidative property is provided, but it is not limited by these. Preferred anti-oxidative fibers are polyethylene terephthalate, polybutylene terephthalate, wholly aromatic polyester, acrylonitrile or derivatives thereof, PTFE, PEEK, PBZT, PBO. The anti-oxidative fiber may be fibrillated, or may not be fibrillated.

The layer having an anti-oxidative property in the present invention is not specifically limited so long as it is the above-mentioned layer having anti-oxidative property, and a formulation amount of the anti-oxidative fiber constituting the layer having an anti-oxidative property is preferably 50 to 100% by weight, more preferably 70 to 100% by weight, most preferably 80 to 100% by weight.

The layer having both of heat resistance and an anti-oxidative property in combination in the present invention preferably comprises a formulation amount of fiber having both of heat resistance and an anti-oxidative property in combination of 20 to 100% by weight, more preferably 50 to 100% by weight, most preferably 70 to 100% by weight based on the whole amount of the layer. The fiber having both of heat resistance and an anti-oxidative property in combination in the present invention may include wholly aromatic polyester, PTFE, PEEK, PBZT, PBO, etc., but it is not limited by these.

The heat-resistant nonwoven fabric of the present invention may contain an organic fiber other than the heat resistant fiber and the anti-oxidative fiber. Such an organic fiber may be mentioned monofiber or complex fiber comprising aliphatic polyamide, polyether sulfone (PES), polyvinylidene fluoride (PVDF), polyvinyl alcohol, ethylene-(vinyl acetate)-vinyl alcohol copolymer, natural fiber, reproduced cellulose, solvent spinning cellulose (lyocell), etc.

A fiber length of these organic fibers is preferably 0.1 mm to 15 mm, more preferably 1 mm to 10 mm. If the fiber length is shorter than 0.1 mm, the fiber is easily dropped, while if it is longer than 15 mm, the fiber gets entangled to easily cause mass, and unevenness in thickness likely caused in some cases. An average fiber diameter of these non-fibrillated fibers is preferably 0.0002 µm or more and 30 µm or less, more preferably 0.01 µm or more and 20 µm or less. A fineness is preferably 0.0001 dtex or more and 3 dtex or less, more preferably 0.005 dtex or more and 2 dtex or less. If the average fiber diameter is less than 0.01 µm, in particular if it is less than 0.0002 µm, or if the fineness is less than 0.005 dtex, in particular if it is less than 0.0001 dtex, the fiber is too fine so that it is difficult to capture the fibrillated heat resistant fiber and the fibrillated cellulose, whereby a basic skeleton of the wet nonwoven fabric is difficultly formed in some cases. If the average fiber diameter is thicker than 20 µm, in particular if it is thicker than 30 µm, or if the fineness is thicker than 2 dtex, in particular if it is thicker than 3 dtex, the fibrillated heat resistant fiber and the fibrillated cellulose easily dropped, and as a result, pin holes are likely generated, and texture formation becomes uneven in some cases.

A sectional shape of the non-fibrillated fiber to be used in the present invention may be either of circular, ellipse shape, square, rectangular, star shape, Y shape, or any other different shapes.

The heat-resistant nonwoven fabric of the present invention comprises a layer having heat resistance and a layer having an anti-oxidative property. At this time, in the "layer having an anti-oxidative property", a layer having both of heat resistance and an anti-oxidative property in combination is also included. These layers may be either wet nonwoven fabric or dry nonwoven fabric. As a preparation method of the heat-resistant nonwoven fabric of the present invention, there may be mentioned a method in which a layer having heat resistance and a layer having an anti-oxidative property are combined by using a plural number of wire cloth according to a wet paper making method, a method in which a plural number of layers is prepared on one wire cloth according to the wet paper making method, a method of thermally adhering, a method of adhering with a resin, and a method in which water-flow is crossed, and the like, and in the viewpoints of uniformity, interlayer strength, and production efficiency, it is preferred to produce a paper by the wet paper making method.

When preparation is carried out by the wet paper making method, there may be used a cylinder paper machine, a fourdrinier paper machine, a short-wire paper machine, an inclined type paper machine, an inclined short-wire type paper machine, or a combination paper machine comprising the same or different kinds of the paper machines mentioned above in combination. As water, deionized water or distilled water is preferably used. A dispersant, a thickener or others, which likely causes an effect on the characteristics of electrochemical elements, shall not be added as little as possible, but a suitable amount may be used. In such a case, nonionic one is preferably used.

A basis weight of the whole heat-resistant nonwoven fabric of the present invention is not particularly limited, and preferably 5 g/m² to 100 g/m², more preferably 8 g/m² to 50 g/m². A thickness of the whole heat-resistant nonwoven fabric of the present invention is not particularly limited, and as a thickness which provides high uniformity, 10 µm to 300 µm is preferred, and 20 µm to 150 µm is more preferred. If it is less than 10 µm, sufficient pierce strength can be hardly obtained, while if it is thicker than 300 µm, for example, an electrode surface area to be contained in an electrochemical element such as a secondary battery or an electric double layer capacitor, etc. becomes small, so that capacity of the electrochemical element becomes small.

### <Fibrillated heat resistant fiber 1>

Para series wholly aromatic polyamide (available from Teijin Techno Products Limited, TWARON 1080, trade name, fineness: 1.2 dtex, fiber length: 3 mm) was dispersed in water so as to have an initial concentration of 5% by weight, and by using a double disc refiner, a beating treatment was repeated 15 times to prepare a fibrillated para series wholly aromatic polyamide fiber having a weight average fiber length of 1.55 mm. In the following, this is designated to as fibrillated heat resistant fiber 1 or FB1.

### <Fibrillated heat resistant fiber 2>

The fibrillated heat resistant fiber 1 was subjected to beating treatment by using a high-pressure homogenizer under the conditions of 500 kg/cm² repeatedly for 25 times to prepare a fibrillated para series wholly aromatic polyamide fiber having a weight average fiber length of 0.61 mm. In the following, this is designated to as fibrillated heat resistant fiber 2 or FB2.

### <Fibrillated heat resistant fiber 3>

Wholly aromatic polyester (available from Kuraray, Co., Ltd., Vectran HHA, trade name, fineness: 1.7 dtex, fiber length: 3 mm) was dispersed into water so that an initial concentration became 5% by weight, beating treatment is carried out 15 times repeatedly by using a double disc refiner, and then, it is treated by using a high-pressure homogenizer under the conditions of 500 kg/cm² for 20 times repeatedly to prepare a fibrillated wholly aromatic polyester fiber having a weight average fiber length of 0.35 mm. In the following, this is designated to as fibrillated heat resistant fiber 3 or FB3.

### <Fibrillated heat resistant fiber 4>

PBO fiber (available from TOYOBO Co., Ltd., Zylon AS, trade name, fineness: 1.7 dtex, fineness: 2 dtex, fiber length: 3 mm) was dispersed into water so that an initial concentration became 5% by weight, beating treatment is carried out 25 times repeatedly by using a double disc refiner, and then, it is treated by using a high-pressure homogenizer under the conditions of 500 kg/cm² for 20 times repeatedly to prepare a fibrillated PBO fiber having a weight average fiber length of 0.58 mm. In the following, this is designated to as fibrillated heat resistant fiber 4 or FB4.

### <Fibrillated cellulose fiber 1>

Linter was dispersed in deionized water so that an initial concentration became 5% by weight, and treated 20 times repeatedly by using a high-pressure homogenizer with a pressure of 500 kg/cm² to prepare a fibrillated cellulose fiber 1 having a weight average fiber length of 0.33 mm.
In the following, this is designated to as fibrillated cellulose fiber 1 or FBC1.

### <Preparation of slurry>

A heat resistant slurry for forming a heat resistant layer and an anti-oxidative slurry for forming an anti-oxidative layer were prepared by using a pulper with the starting materials and contents thereof as shown in Table 1. At this time, deionized water was used.
"PET1" in Table 1 means a polyethylene terephthalate fiber having a fineness of 0.1 dtex and a fiber length of 3 mm (available from TEIJIN LIMITED, TEIJIN TETORON TEPYRUS TM04PN SDO.1X3, trade name),
"PET2" means polyethylene terephthalate fiber having a fineness of 0.6 dtex and a fiber length of 5 mm (available from TEIJIN LIMITED, TEIJIN TETORON TA04N SD0.6X5, trade name),
"PET3" means core-shell complex fiber having a fineness of 1.7 dtex and a fiber length of 5 mm (available from TEIJIN LIMITED, TEIJIN TETORON TJ04CN SD1.7X5, trade name, core portion: polyethylene terephthalate having a melting point of 255°C, shell portion: a copolymerized polyester containing a polyethylene terephthalate component and a polyethylene isophthalate component, a melting point of 110°C),
"PET4" means wholly aromatic polyester fiber having a fineness of 1.7 dtex and a fiber length of 5 mm (available from Kuraray, Co., Ltd., Vectran HHA, trade name).
"A1" means acrylic fiber having a fineness of 0.1 dtex and a fiber length of 3 mm (available from MITSUBISHI RAYON CO., LTD., Vonnel M.V.P, trade name, an acrylonitrile series copolymer comprising three components of acrylonitrile, methyl acrylate, and methacrylic acid derivative),
"PA1" means aromatic polyamide having a fiber fineness of 0.08 dtex and a fiber length of 3 mm (available from Kuraray, Co., Ltd., Genestar, trade name, a melting point of 255°C, a softening point of 230°C),
"PA2" means para series wholly aromatic polyamide fiber having a fineness of 1.2 dtex and a fiber length of 5 mm (available from Teijin Techno Products Limited, Technora, trade name),
"PBO1" means PBO fiber having a fineness of 1.7 dtex and a fiber length of 5 mm, available from TOYOBO CO., LTD., ZYLON AS, trade name).

**Table 1**

| Heat resistant slurry | Starting material, content (% by weight) |
|---|---|
| 1 | FB1/PA1=50/50 |
| 2 | FB1/PET1/FBC1=70/20/10 |
| 3 | FB1/PA2/FBC1=50/45/5 |
| 4 | FB1/PET1/PA2/PET3 =30/20/30/20 |
| 5 | FB2/PA1/PA2/FBC1 =50/20/20/10 |
| 6 | FB2/A1/FBC1=32/58/10 |
| 7 | FB2/PA1/PET3=50/20/30 |
| 8 | FB3/PET2/PET3=60/20/20 |
| 9 | FB3/PET1/PET4/FBC1 =40/20/30/10 |
| 10 | FB3/PET1/FBC1=50/30/20 |
| 11 | FB4/A1/FBC1=60/30/10 |
| 12 | FB4/PBO1=50/50 |
| 13 | FB4/PA1/PBO1/FBC1 =70/10/10/10 |
| 14 | PA2/PET1/PET3/FBC1 =50/25/20/5 |
| 15 | PA2/PET1/PET3=50/20/30 |
| 16 | PET1/PET3/PET4=30/20/50 |

| Anti-oxidative slurry | Starting material, content (% by weight) |
|---|---|
| 1 | PET1/FBC1=90/10 |
| 2 | A1/FBC1=90/10 |
| 3 | FB3/PET1/FBC1=50/40/10 |
| 4 | FB3/PET4/FBC1=50/30/20 |

In the following, the present invention is explained in more detail by referring to Examples, but the present invention is not limited by these Examples.

### (Examples 1 to 16)

As shown in Table 2, a heat resistant slurry and an anti-oxidative slurry were each flown to respective predetermined paper making machines, and subjected to wet paper making with predetermined basis weights to prepare heat-resistant nonwoven fabrics 1 to 3, 6 to 9, 11 to 13 each comprising a layer having heat resistance and a layer having anti-oxidative property. Also, heat-resistant nonwoven fabrics 4, 5, 10, 14 to 16 comprising a layer having heat resistance and a layer having both of heat resistance and an anti-oxidative property in combination were prepared. A whole density of the heat-resistant nonwoven fabrics 1 to 16 was made 0.5 g/cm³. In the heat resistance table, "Cylinder" means a cylinder paper machine, "Inclined" means an inclined type paper machine, and "Inclined short-wire" means an inclined short-wire type paper machine.

### (Comparative example 1 to 3)

As shown in Table 2, a heat resistant slurry or an anti-oxidative slurry was flown to respective predetermined paper making machines, and subjected to wet paper making with predetermined basis weights to prepare nonwoven fabrics 17 and 18 having a heat resistant layer alone with a density of 0.5 g/cm³, and a nonwoven fabric 19 having an anti-oxidative layer alone with a density of 0.5 g/cm³.

### <Preparation of electric double layer capacitors 1 to 16>

85% by weight of activated carbon having an average particle size of 6 µm as an electrode active substance, 7% by weight of carbon black as a conductive material, and 8% by weight of a polytetrafluoroethylene as a binder were mixed and kneaded to prepare a sheet-shaped electrode with a thickness of 0.2 mm. This was adhered to the both surfaces of an aluminum foil with a thickness of 50 µm by using a conductive adhesive, and rolled to prepare an electrode. This electrode was used as a negative electrode and a positive electrode. The heat-resistant nonwoven fabrics 1 to 16 were each laminated by interposing between the negative electrode and the positive electrode, and wound to a spiral shape by using a winding machine to prepare spiral type elements. At this time, the layer having an anti-oxidative property was positioned at the surface contacting with the positive electrode. Heat-resistant nonwoven fabrics were each provided at the both outermost layers at the positive electrode side and the negative electrode side. This spiral type element was contained in a case made of aluminum, to a positive electrode terminal and a negative electrode terminal attached to the case were welded a positive electrode lead and a negative electrode lead, and the case was sealed except for an electrolyte pouring port. The whole case was subjected to heat treatment at 250°C for 50 hours to remove water component contained in the electrodes and the heat-resistant nonwoven fabric. This was allowed to cool to room temperature, and then, an electrolyte was poured into the case, and the pouring port was closed to prepare electric double layer capacitors 1 to 16, respectively. As the electrolyte, a material in which (C₂H₅)₃(CH₃)NBF₄ was dissolved in propylene carbonate so that the amount thereof became 1.5 mol/l was used.

### <Preparation of electric double layer capacitors 17 to 19>

Electric double layer capacitors 17 to 19 were prepared in the same manner as in the preparation of the electric double layer capacitors 1 to 16 except for using the nonwoven fabrics 17 to 19 in place of the heat-resistant nonwoven fabric.

With regard to the heat-resistant nonwoven fabrics 1 to 16, the nonwoven fabrics 17 to 19 and the electric double layer capacitors 1 to 19, their properties were measured according to the following test methods, and the results are shown in Tables 3 to 4.

### <Pierce strength>

Samples in which the heat-resistant nonwoven fabrics 1 to 16 and nonwoven fabrics 17 to 19 were cut to an optional size of a width of 50 mm or more and a length of 200 mm or more were prepared. They were placed in a thermostatic dryer (manufactured by YAMATO SCIENTIFIC Co., Ltd., DHS82), and subjected to heat treatment at 250°C for 50 hours. Thereafter, they were all cut to stripe shape with a width of 50 mm. A metal needle (manufactured by ORIENTEC Co., Ltd.) having a diameter of 1 mm and the tip thereof was rounded (curvature 1.6) was mounted on a table type material tester (manufactured by ORIENTEC Co., Ltd., STA-1150), and fallen to the surface of the sample vertically with a constant rate of 1 mm/s until it penetrate the sample. The maximum load (N) at this time was measured, and this was made a pierce strength. With regard to one sample, 5 points or more were measured, and the least pierce strength value among the whole measured values was shown in Table 3.

### <Failure ratio>

Resistance values of each 100 samples of the electric double layer capacitors 1 to 19 were measured, and an internal short-circuit failure ratio per 100 samples was calculated and shown in Table 3.

### <Anti-oxidative property>

To electric double layer capacitors 1 to 19 was applied a voltage of 2.7V for 72 hours continuously, the heat-resistant nonwoven fabric and the nonwoven fabric were taken out, the heat-resistant nonwoven fabric surface and the nonwoven fabric surface which had been contacted with the positive electrode were washed with methanol, and then, infrared absorption spectrum was observed. A wave number (A) of an absorption band which showed the maximum absorbance in 500cm⁻¹ to 3000cm⁻¹ before and after applying an voltage was confirmed. When the position of (A) has been changed by applying an voltage, it was described as "changed" in Table 4, and when change was not occurred, then it was described as "no change", and a wave number (A) which showed the maximum absorbance was also shown. A changed rate ((C-D)/C)(%) of the ratio (D) which is a ratio of an absorbance of (A) and an absorbance of (B) after applying the voltage, based on a ratio (C) which is a ratio of the maximum absorbance and the absorbance at the wave number (B) before applying the voltage was calculated. Wave numbers (A) and (B) of the absorption bands used for calculation and the absolute values of the changed rate were shown in Table 4.

### <Characteristics maintaining ratio>

To the electric double layer capacitors 1 to 19 was applied a voltage of 2.7V at 70°C for 1000 hours continuously and then an electrostatic capacity thereof was measured, and a rate (%) based on an initial electrostatic capacity, i.e., an electrostatic capacity retaining rate was obtained, which is made a characteristics maintaining ratio, and shown in Table 4. The larger the value is, the longer the lifetime is so that it means that it is preferred.

**Table 2**

| Example | Heat resistant slurry | Paper-making machine | Basis weight g/m² | Anti-oxidative slurry | Paper-making machine | Basis weight g/m² |
|---|---|---|---|---|---|---|
| Example 1 | 1 | Cylinder | 20 | 1 | Cylinder | 10 |
| Example 2 | 2 | Inclined | 20 | 1 | Cylinder | 15 |
| Example 3 | 3 | Inclined | 25 | 2 | Cylinder | 10 |
| Example 4 | 4 | Inclined | 20 | 3 | Inclined short-wire | 10 |
| Example 5 | 5 | Cylinder | 15 | 4 | Inclined | 15 |
| Example 6 | 6 | Inclined | 20 | 2 | Cylinder | 10 |
| Example 7 | 7 | Cylinder | 20 | 2 | Cylinder | 10 |
| Example 8 | 8 | Inclined | 20 | 1 | Cylinder | 10 |
| Example 9 | 9 | Inclined | 20 | 1 | Cylinder | 10 |
| Example 10 | 10 | Cylinder | 10 | 3 | Inclined short-wire | 10 |
| Example 11 | 11 | Cylinder | 15 | 2 | Cylinder | 15 |
| Example 12 | 12 | Cylinder | 20 | 1 | Cylinder | 10 |
| Example 13 | 13 | Inclined | 20 | 1 | Cylinder | 10 |
| Example 14 | 14 | Cylinder | 15 | 4 | Inclined | 15 |
| Example 15 | 15 | Cylinder | 20 | 3 | Inclined short-wire | 10 |
| Example 16 | 16 | Cylinder | 10 | 3 | Inclined short-wire | 20 |
| Comparative example 1 | 3 | Inclined | 30 | None | None | None |
| Comparative example 2 | 7 | Cylinder | 30 | None | None | None |
| Comparative example 3 | None | None | None | 1 | Cylinder | 30 |

**Table 3**

| Example | Pierce strength N | Failure ratio % |
|---|---|---|
| Example 1 | 0.8 | 15 |
| Example 2 | 0.9 | 15 |
| Example 3 | 2.5 | 5 |
| Example 4 | 0.5 | 30 |
| Example 5 | 1.7 | 8 |
| Example 6 | 2.3 | 6 |
| Example 7 | 0.7 | 18 |
| Example 8 | 0.6 | 24 |
| Example 9 | 1.5 | 10 |
| Example 10 | 0.5 | 30 |
| Example 11 | 1.0 | 14 |
| Example 12 | 1.2 | 12 |
| Example 13 | 0.8 | 15 |
| Example 14 | 1.6 | 9 |
| Example 15 | 1.1 | 12 |
| Example 16 | 0.8 | 15 |
| Comparative example 1 | 1.9 | 9 |
| Comparative example 2 | 0.8 | 17 |
| Comparative example 3 | 0.4 | 56 |

**Table 4**

| Example | Anti-oxidative property Maximum absorbance wave number (A) cm⁻¹ | Anti-oxidative property (A)/(B) changed rate (D)% | Characteristics maintaining ratio % |
|---|---|---|---|
| Example 1 | No change 1709 | 1709/1339 12.6 | 92 |
| Example 2 | No change 1709 | 1709/1339 12.5 | 92 |
| Example 3 | No change 2237 | 2237/1063 15.3 | 87 |
| Example 4 | No change 1711 | 1711/1339 13.8 | 90 |
| Example 5 | No change 1711 | 1711/1339 23.7 | 84 |
| Example 6 | No change 2237 | 2237/1063 15.2 | 88 |
| Example 7 | No change 2237 | 2237/1063 15.5 | 86 |
| Example 8 | No change 1709 | 1709/1339 12.6 | 92 |
| Example 9 | No change 1709 | 1709/1339 12.5 | 92 |
| Example 10 | No change 1711 | 1711/1339 13.6 | 91 |
| Example 11 | No change 2237 | 2237/1063 15.0 | 88 |
| Example 12 | No change 1709 | 1709/1339 12.7 | 92 |
| Example 13 | No change 1709 | 1709/1339 12.6 | 92 |
| Example 14 | No change 1711 | 1711/1339 24.5 | 84 |
| Example 15 | No change 1711 | 1711/1339 13.6 | 90 |
| Example 16 | No change 1711 | 1711/1339 13.5 | 90 |
| Comparative example 1 | Changed | 722/1046 78.9 | 45 |
| Comparative example 2 | Changed | 1241/724 42.0 | 62 |
| Comparative example 3 | No change 1709 | 1709/1339 12.5 | 92 |

As shown in Table 3, the heat-resistant nonwoven fabrics prepared in Examples 1 to 16 have pierce strength after heat treatment at 250°C for 50 hours of 0.5N or more, so that failure ratio of electric double layer capacitors was low whereby they are excellent. Also, as shown in Table 4, they have a layer having an anti-oxidative property, the positive electrode side is not deteriorated by oxidation, a maintaining rate of characteristics of the electric double layer capacitor is high, whereby they showed high reliability.

On the other hand, The nonwoven fabrics prepared in Comparative example 1 and 2 comprise a layer having heat resistance alone, pierce strength after heat treatment was strong, and a failure ratio was low, but they do not have a layer having an anti-oxidative property so that deterioration by oxidation at the positive electrode side was significant, and a maintaining rate of characteristics of the electric double layer capacitor was poor.

The nonwoven fabric prepared in Comparative example 3 was excellent in a maintaining rate of characteristics since it has a layer having an anti-oxidative property, but it does not have a layer having heat resistance, pierce strength after heat treatment at 250°C for 50 hours was weak, and a failure ratio of the electric double layer capacitor was high.

### UTILIZABILITY IN INDUSTRY

The heat-resistant nonwoven fabrics of the present invention comprise a layer having heat resistance and a layer having an anti-oxidative property (which includes a layer having both of heat resistance and an anti-oxidative property in combination), so that they have large pierce strength after high temperature heat treatment or after reflow, difficultly causing damage or breakage due to external pressure or impact, and have a layer having an anti-oxidative property so that they can endure high voltage.
As an application example of the present invention, there may be mentioned a use in which both characteristics of heat resistance and an anti-oxidative property are required, for example, a separator for an electric double layer capacitor, an electrolytic capacitor, a lithium ion battery and the like.

## Claims

1. A heat-resistant nonwoven fabric comprising a layer having heat resistance and a layer having an anti-oxidative property, wherein the heat-resistant nonwoven fabric has a pierce strength after treatment at 250°C for 50 hours of 0.5N or more, a position (A) of an absorptive band showing a maximum infrared absorbance at 500 cm⁻¹ to 3000 cm⁻¹ of the layer having an anti-oxidative property does not change before and after applying a voltage of 2.7V for 72 hours, and an absolute value of a changed rate ((C-D)/C) of a ratio (D) which is a ratio of an absorbance of (A) and an absorbance of (B) after applying the voltage, based on a ratio (C) which is a ratio of the maximum absorbance and the absorbance of (B) before applying the voltage of less than 25%,
wherein the wave number (B) is a wave number of independent absorption peaks other than an absorption peak branched from the absorption band (A) and a shoulder peak, successively selected from a larger absorbance among the group of its independent absorption peaks, and is a wave number which is a maximum value of absorbance among the absolute values of the changed rate ((C-D)/C) of the absorbances being less than 25%.

2. The heat-resistant nonwoven fabric according to Claim 1, wherein the layer having an anti-oxidative property is a layer having both of heat resistance and an anti-oxidative property in combination.

3. The heat-resistant nonwoven fabric according to Claim 1, wherein the layer having heat resistance contains heat resistant fiber having all of a softening point, a melting point and a thermal decomposition temperature of 250°C or higher and 700°C or lower.

4. The heat-resistant nonwoven fabric according to Claim 1, wherein the layer having heat resistance contains heat resistant fiber having all of a softening point, a melting point and a thermal decomposition temperature of 260°C or higher and 650°C or lower.

5. The heat-resistant nonwoven fabric according to Claim 1, wherein a formulation amount of the heat resistant fiber in the layer having heat resistance is 50 to 100% by weight based on the whole amount of the layer.

6. The heat-resistant nonwoven fabric according to any one of Claims 3 to 5, wherein at least part of the heat resistant fiber is fibrillated to a fiber diameter of 1 µm or less.

7. The heat-resistant nonwoven fabric according to Claim 3, wherein the heat resistant fiber is at least one selected from the group consisting of wholly aromatic polyamide, wholly aromatic polyester, wholly aromatic polyester amide, wholly aromatic polyether, wholly aromatic polycarbonate, wholly aromatic polyazomethine, polyphenylene sulfide, poly-p-phenylenebenzobisthiazole, polybenzimidazole, polyetherether ketone, polyamideimide, polyimide, polytetrafluoroethylene and poly-p-phenylene-2,6-benzobisoxazole.

8. The heat-resistant nonwoven fabric according to Claim 7, wherein the para series wholly aromatic polyamide is at least one selected from the group consisting of poly(para-phenylenetelephthalamide), poly(parabenzamide), poly(para-amide hydrazide), poly(paraphenylenetelephthalamide-3,4-diphenyl ether telephthalamide), poly(4,4'-benzanilide telephthalamide), poly(paraphenylene-4,4'-biphenylene-dicarboxylic acid amide), poly(paraphenylene-2,6-naphthalene dicarboxylic acid amide), poly(2-chloro-p-phenylene-telephthalamide) and copolyparaphenylene-3,4'-oxydiphenyl-enetelephthalamide.

9. The heat-resistant nonwoven fabric according to Claim 7, wherein the wholly aromatic polyester is obtained by polymerizing at least two monomers selected from the group consisting of an aromatic diol, an aromatic dicarboxylic acid and an aromatic hydroxycarboxylic acid.

10. The heat-resistant nonwoven fabric according to Claim 1, wherein a formulation amount of the anti-oxidative fiber in the layer having an anti-oxidative property is 50 to 100% by weight based on the whole amount of the layer.

11. The heat-resistant nonwoven fabric according to Claim 1, wherein the layer having an anti-oxidative property is a layer having both of heat resistance and an anti-oxidative property in combination, and a formulation amount of the fiber having both of heat resistance and an anti-oxidative property in combination is 20 to 100% by weight based on the whole amount of the layer.

12. The heat-resistant nonwoven fabric according to Claim 1, wherein the layer having an anti-oxidative property contains at least one anti-oxidative fiber selected from the group consisting of polyethylene terephthalate, polybutylene terephthalate, wholly aromatic polyester, polyolefin, acrylonitrile and derivatives thereof, polytetrafluoroethylene, polyetherether ketone, poly-p-phenylenebenzobisthiazole and poly-p-phenylene-2,6-benzobisoxazole.

13. The heat-resistant nonwoven fabric according to Claim 1, wherein the layer having an anti-oxidative property is a layer having both of heat resistance and an anti-oxidative property in combination, and contains at least one fiber having both of heat resistance and an anti-oxidative property in combination selected from the group consisting of wholly aromatic polyester, polytetrafluoroethylene, polyetherether ketone, poly-p-phenylenebenzobisthiazole and poly-p-phenylene-2,6-benzobisoxazole.

14. The heat-resistant nonwoven fabric according to Claim 1, wherein a basis weight of the heat-resistant nonwoven fabric is 5 g/m² to 100 g/m².

15. The heat-resistant nonwoven fabric according to Claim 1, wherein a basis weight of the heat-resistant nonwoven fabric is 8 g/m² to 50 g/m².

16. The heat-resistant nonwoven fabric according to Claim 1, wherein a thickness of the heat-resistant nonwoven fabric is 10 µm to 300 µm.

17. The heat-resistant nonwoven fabric according to Claim 1, wherein a thickness of the heat-resistant nonwoven fabric is 20 µm to 150 µm.
